(19) **Europäisches Patentamt**
**European Patent Office**
**Office européen des brevets**

(11) **EP 4 256 839 B1**

(12) **EUROPEAN PATENT SPECIFICATION**

(45) Date of publication and mention
of the grant of the patent:
**24.12.2025  Bulletin 2025/52**

(21) Application number: **21824546.2**

(22) Date of filing: **03.12.2021**

(51) International Patent Classification (IPC):
***H04W 24/02*** *(2009.01)*        ***H04B 7/06*** *(2006.01)*
***H04W 72/54*** *(2023.01)*

(52) Cooperative Patent Classification (CPC):
**H04W 24/02; H04B 7/0617; H04W 72/54**

(86) International application number:
**PCT/EP2021/084087**

(87) International publication number:
**WO 2022/117780 (09.06.2022 Gazette 2022/23)**

(54) **METHOD, APPARATUS AND COMPUTER PROGRAM FOR MACHINE LEARNING-ASSISTED BEAMS COORDINATED SCHEDULING IN 5G AND BEYOND**

VERFAHREN, VORRICHTUNG UND COMPUTERPROGRAMM FÜR MASCHINENLERNGESTÜTZTE STRAHLENKOORDINIERTE PLANUNG IN 5G UND MEHR

PROCÉDÉ, APPAREIL ET PROGRAMME INFORMATIQUE POUR UNE PROGRAMMATION COORDONNÉE DE FAISCEAUX ASSISTÉE PAR APPRENTISSAGE AUTOMATIQUE DANS DES SYSTÈMES 5G ET AU-DELÀ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2020  FI 20206243**

(43) Date of publication of application:
**11.10.2023  Bulletin 2023/41**

(73) Proprietor: **Nokia Solutions and Networks Oy**
**02610 Espoo (FI)**

(72) Inventors:
• **CAPDEVIELLE, Veronique**
 **78114 Magny les Hameaux (FR)**
• **AICHMANN, Wolfgang**
 **89257 Illertissen (DE)**
• **AGUDELO RAMIREZ, Santiago**
 **75013 Paris (FR)**
• **FEKI, Afef**
 **92330 Sceaux (FR)**
• **ABINADER, Fuad**
 **91300 Massy (FR)**
• **UZEDA GARCIA, Luis Guilherme**
 **91300 Massy (FR)**
• **SYED MUHAMMAD, Fahad**
 **91400 Orsay (FR)**
• **HANIF, Ahmed Farhan**
 **78000 Versailles (FR)**

(74) Representative: **Nokia EPO representatives**
**Nokia Technologies Oy**
**Karakaari 7**
**02610 Espoo (FI)**

(56) References cited:
**WO-A1-2020/181533      KR-A- 20190 048 774**
**US-A1- 2011 009 105    US-A1- 2019 141 580**

**Description**

<u>Field of the Invention</u>

Various example embodiments relate to mobile or wireless telecommunication systems, and in particular to beams coordinated scheduling.

<u>Background</u>

Examples of mobile or wireless telecommunication systems may include the universal mobile telecommunications system (UMTS) terrestrial radio access network (UTRAN), long term evolution (LTE) evolved UTRAN (E-UTRAN), LTE-advanced (LTE-A), LTE-A Pro, and/or fifth generation (5G) radio access technology (RAT) or new radio (NR) access technology. 5G or NR wireless systems refer to the next generation (NG) of radio systems and network architecture. It is estimated that NR will provide bitrates on the order of 10-20 Gbit/s or higher and will support at least enhanced mobile broadband (eMBB) and ultra-reliable low-latency-communication (URLLC). NR is expected to deliver extreme broadband and ultra-robust, low latency connectivity and massive networking to support the Internet of things (IoT). With IoT and machine-to-machine (M2M) communication becoming more widespread, there will be a growing need for networks that meet the needs of lower power, high data rates, and long battery life. It is noted that a node that can provide in 5G or NR radio access functionality to a user equipment (UE) (i.e., similar to Node B in E-UTRAN or eNB in LTE) or that can support 5G or NR as well as connectivity to next generation core (also denoted by NGC or 5GC) may be referred to as a next generation or 5G Node B (also denoted by gNB or 5G NB).

US2011009105A discloses a method for determining whether to reconfigure a self-organizing network (SON). The method comprises: at each BTS, scanning an antenna beam, measuring performance data, and determining whether measured performance data indicates a network reconfiguration; if the result is affirmative, selecting one or more of reconfiguring the SON by changing the RF output power of the first BTS, changing an antenna beam pattern of the antenna at the first BTS, changing an antenna tilt angle of the antenna at the first BTS, changing an operating frequency of the first BTS and updating a proximate cell site list of the first BTS.

KR20190048774A discloses a method of automatic gain control and beam scheduling considering beam interference in a beamforming communication system. A base station having multiple antennas comprises a control unit for collecting interference information between multiple transmission beams and controlling to generate a beam combination list for combinations of transmission beams that are not transmitted at the same time based on the interference information and transmit the beam combination list to a terminal.

US2019141580A discloses a SON where planning, configuration and management of the mobile networks are targeted to optimize the value offered to a group of subscribers using criteria such as (a) subscriber type (consumer, corporate, IOT, etc.), (b) service type (mission critical, public safety, VoIP, etc.), (b) subscriber usage volume (high, medium, low), (c) subscriber's requested/subscribed QoS, and (d) subscriber's paying value (i.e., revenue).

WO2020181533A1 discloses a method for adjusting beamforming profiles. An initial beamforming profile is currently used. A respective beamforming performance estimation is determined based on performance measurement information for the initial beamforming profile, the initial beamforming profile, each candidate beamforming profile and a learning model. One of the candidate beamforming profiles is selected based on the beamforming performance estimation and the performance measurement information.

<u>Summary</u>

According to an aspect, it is provided a method comprising: receiving at a centralized self-organizing network entity, from a data collection entity, a time series of a respective set of data from each cell, where each set of data comprises at least: one or more per-cell performance measurement data, one or more per-cell serving beams of each scheduled user equipment device, and a time and frequency allocation of each scheduled user equipment device to be served by the corresponding one or more per-cell serving beams; generating by the centralized self-organizing network entity, from the sets of data, a set of cross-beam inter-cell interference profiles; establishing by the centralized self-organizing network entity, from at least the set of cross-beam inter-cell interference profiles, a beam scheduling policy; and transmitting, to a respective scheduler in each cell, the beam scheduling policy for application to each of the one or more per-cell serving beams.

The method may comprise: receiving, at the data collection entity, from each cell, the time series of the respective set of data; receiving, at each cell, from the centralized self-organizing network entity, the beam scheduling policy; and applying, by the respective scheduler at each cell, the beam scheduling policy to each of the one or more per-cell serving beams.

The set of cross-beam inter-cell interference profiles may comprise at least a respective interference probability for each serving beam pair of co-scheduled beams and a respective compliancy level for each set of co-scheduled beams, the co-scheduled beams comprising at least two serving beams which are each from a respective cell and which are scheduled on the same time and frequency resources.

The step of generating a set of cross-beam inter-cell interference profiles may comprise at least: labelling each set of co-scheduled beams as normal or abnormal depending on the one or more per-cell performance measurement data; training a machine learning model using each labelled set of co-scheduled beams and the one or more per-cell performance measurement data, as to obtain a trained machine learning model; using the trained machine learning model on the one or more per-cell performance measurement data per realization of co-scheduled beams to classify each set of co-scheduled beams as normal or abnormal depending on their respective compliancy level; and computing the respective interference probability for each serving beam pair of co-scheduled beams.

The compliancy level may be correlated to a cross-beam inter-cell interference level and to the one or more per-cell performance measurement data, each set of co-scheduled beams being classified as abnormal when the respective compliancy level is correlated to a high cross-beam inter-cell interference level and as normal when the respective compliancy level is correlated to a low cross-beam inter-cell interference level.

The step of labelling each set of co-scheduled beams as normal or abnormal depending on the one or more per-cell performance measurement data may be based at least:

- on a first anomaly detection by: detecting an outlier based on the one or more per-cell performance measurement data; determining whether or not the detected outlier is associated with a performance degradation; labelling the set of co-scheduled beams corresponding to the detected outlier as abnormal when the detected outlier is associated with the performance degradation; labelling the set of co-scheduled beams corresponding to the detected outlier as normal when the detected outlier is not associated with the performance degradation; and labelling each other set of co-scheduled beams corresponding to no detected outlier as normal,
  and/or
- on a second anomaly detection by: forming a data cluster from the one or more per-cell performance measurement data; determining whether or not the data cluster is associated with a performance degradation; labelling each set of co-scheduled beams corresponding to the data of the data cluster as abnormal when the data cluster is associated with the performance degradation; and labelling each set of co-scheduled beams corresponding to the data of the data cluster as normal when the data cluster is not associated with the performance degradation.

The step of establishing a beam scheduling policy may comprise: building a pattern of beam penalties which are to be applied per cell to each of the one or more per-cell serving beams in order to selectively limit a use of one or more co-scheduled beams from respective cells on the same time and frequency resources.

The pattern may comprise one of a space time pattern, a space frequency pattern, and a space time and frequency pattern.

The step of building a pattern of beam penalties may comprise, when an interference probability is determined high for a serving beam pair of co-scheduled beams including a first serving beam from a cell and a second serving beam from another cell:

- assigning a high level of beam penalty to the first serving beam and a low level of beam penalty to the second serving beam at a given slot, so as to limit a use of the first serving beam with respect to the second serving beam during the given slot; and assigning a low level of beam penalty to the first serving beam and a high level of beam penalty to the second serving beam at another slot subsequent to the given slot, so as to limit a use of the second serving beam with respect to the first serving beam during said another slot, wherein the slot may comprise at least one of a time slot and a frequency slot,
  or
- assigning a low level of beam penalty to the first serving beam and a high level of beam penalty to the second serving beam at a given slot, so as to limit a use of the second serving beam with respect to the first serving beam during the given slot; and assigning a high level of beam penalty to the first serving beam and a low level of beam penalty to the second serving beam at another slot subsequent to the given slot, so as to limit a use of the first serving beam with respect to the second serving beam during said another slot, wherein the slot may comprise at least one of a time slot and a frequency slot.

The interference probability may be determined high when the interference probability value is above a predetermined threshold value, and determined low when the interference probability value is below the predetermined threshold value.

The step of applying the beam scheduling policy to each of the one or more per-cell serving beams may comprise: determining, by the respective scheduler at each cell, which UE device and corresponding serving beam to schedule based on at least the pattern of beam penalties.

According to an aspect, it is provided a system comprising means at least for performing the above method.

The means comprise: at least one processor; and at least one memory comprising computer program code, wherein the at least one memory and the computer program code are configured, with the at least one processor, to cause the performance of the system.

According to an aspect, it is provided a centralized self-organizing network entity comprising means at least for: receiving, from a data collection entity, a time series of a respective set of data from each cell, where each set of data comprises at least: one or more per-cell performance measurement data, one or more per-cell serving beams of each scheduled user equipment device, and a time and frequency allocation of each scheduled user equipment device to be served by the corresponding one or more per-cell serving beams; generating, from the sets of data, a set of cross-beam inter-cell interference profiles; establishing, from at least the set of cross-beam inter-cell interference profiles, a beam scheduling policy; and transmitting, to a respective scheduler in each cell, the beam scheduling policy for application to each of the one or more per-cell serving beams.

The means comprised by the centralized self-organizing network entity may comprise: at least one processor; and at least one memory comprising computer program code, wherein the at least one memory and the computer program code are configured, with the at least one processor, to cause the performance of the cSON entity.

According to an aspect, it is provided a system comprising the centralized self-organizing network entity; and means at least for: receiving, at the data collection entity, from each cell, the time series of a respective set of data; receiving, at each cell, from the centralized self-organizing network entity, the beam scheduling policy; and applying, by the respective scheduler at each cell, the beam scheduling policy to each of the one or more per-cell serving beams.

According to an aspect, it is provided a computer readable medium comprising program instructions stored thereon for performing any of the previously described methods.

The computer readable medium may be a non-transitory computer readable medium. In the above, many different aspects have been described. It should be appreciated that further aspects may be provided by the combination of any two or more of the aspects described above.

Various other aspects are also described in the following detailed description and in the attached claims.

Brief Description of the Drawings

Some example embodiments will now be described with reference to the following accompanying drawings:

Figure 1 shows an example schematic embodiment of a beam collision.

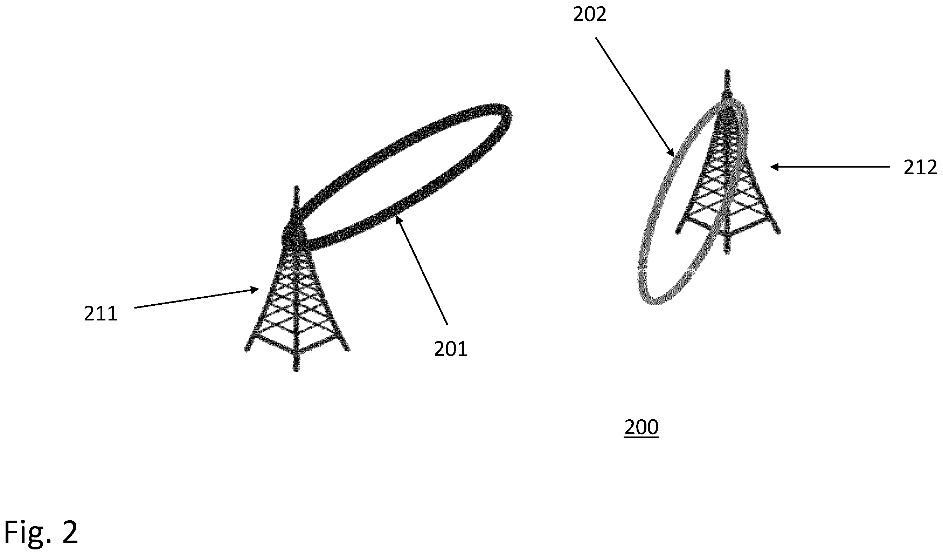

Figure 2 shows an example schematic embodiment of a beam collision avoidance.

Figure 3 shows an example schematic embodiment of a beams coordinated scheduling method comprising three subsequent phases with respective time scales.

Figure 4A shows an example schematic embodiment of the first phase of the beams coordinated scheduling method when running in non-real time.

Figure 4B shows an example schematic embodiment of the second phase of the beams coordinated scheduling method when running in near-real time.

Figure 4C shows an example schematic embodiment of the third phase of the beams coordinated scheduling method when running in real time.

Figure 5 shows an example flowchart describing an example embodiment of the beams coordinated scheduling method within an ORAN framework.

Figure 6 shows an example schematic embodiment describing how the beams coordinated scheduling method when running in non-real time may generate a set of cross-beam inter-cell interference profiles.

Figure 7 shows an example embodiment of a per-cell KPI for a set of co-scheduled beams from a respective cell plotted against time for illustrating the case of an example first anomaly detection.

Figure 8 shows an example embodiment of data clustering based on SINR and RSRP along with interference quartiles plotted against the corresponding clusters for illustrating the case of an example second anomaly detection.

Figure 9 shows an example schematic embodiment of a space time pattern of beam penalties.

Figure 10 shows an example flowchart describing the beams coordinated scheduling method of figure 3 implemented at a system level.

Figure 11 shows an example flowchart describing the beams coordinated scheduling method of figure 3 implemented at an apparatus level.

Figure 12 shows an example embodiment of an apparatus.

Figure 13 shows an example embodiment of computer readable media.

Detailed description

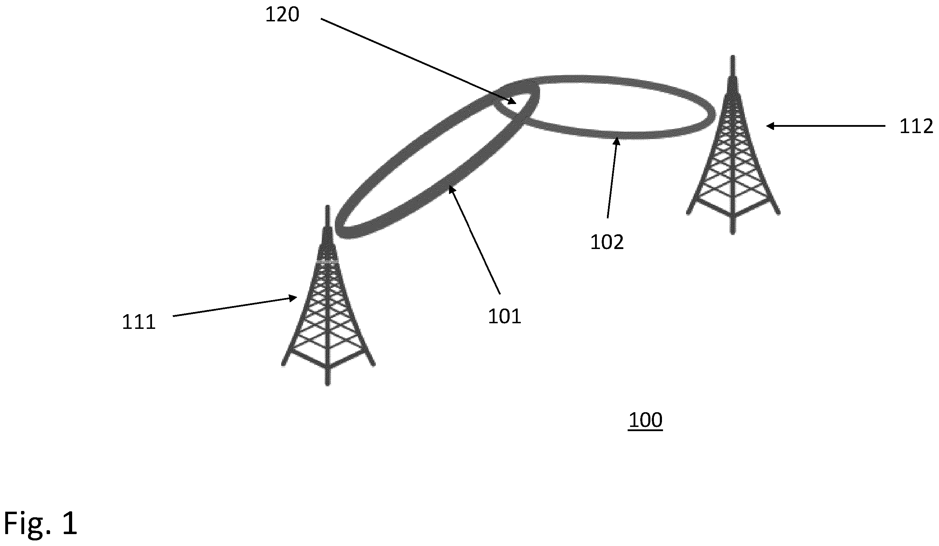

The following example embodiments may apply to massive multiple-input multiple-output (MIMO) systems with beamforming. In particular, the MIMO systems may be single-user MIMO (SU-MIMO) systems or multi-user MIMO (MU-MIMO) systems.
Massive MIMO system is one of the key enablers for 5G wireless networks to optimize spectral efficiency. MIMO system relies on multiple antennas to transmit or receive data over multiple paths in the same radio channel. With beamforming, directional transmissions are achieved by combining, in amplitude and phase, the signals of antenna elements of the antenna array. Massive MIMO system implies an antenna grid with a large number of antenna elements capable of producing multiple focused beams to serve individual UE devices (e.g., a mobile device, a stationary device, an IoT device, or any other device capable of communication with a wireless communication network) simultaneously.
In an example, beamforming may be based on grid of beams (GoB), which is made of an overlay of beams wherein each beam points towards a defined direction in space for coverage. In an alternative scenario, beamforming may be based on more sophisticated beamforming algorithms such as eigen-based beamforming (EBB). For effective isotropic radiated power (EIRP) control, each applied eigen beam may be expanded in terms of discrete Fourier transform (DFT) beams (the dominant ones at least) to then use these DFT beams instead of the best GoB beams.
In an example embodiment, each scheduled UE device may be served in downlink (DL) by a beam from the GoB that is operated by its serving cell. As illustrated in figure 1, the DL transmission to the scheduled UE device may be interfered by beams of co-scheduled UE devices (i.e., UE devices which are scheduled at a same time slot) from neighboring cells using the same carrier frequency. As depicted in figure 1 showing an example schematic embodiment 100 of a beam collision, if at least two beams 101, 102 from different serving cells 111, 112 are conflicting, i.e., partially or fully covering the same overlapped area 120, the corresponding mutual interference may cause a significant performance drop.
To illustrate the negative impact of such mutual interference, simulations have been conducted using a system-level simulator. An Urban Macro cellular scenario consisting of three-sectorized sites with an inter-site distance of 200 meters has been simulated, and the simulated traffic was full buffer. The simulation scenario has taken place at FR1 frequency band. As known in the prior art, two different frequency ranges FR1 and FR2 are available for the 5G technology. FR1 stands for frequency range 1 and includes frequency bands from 410 to 7125 MHz, and FR2 stands for frequency range 2 and includes frequency bands from 24.25 GHz to 52.6 GHz. The simulation scenario has been directed to a SU-MIMO scenario with antennas at the base stations (BS) consisting of a 2x4x4 panel configuration and with a GOB with 8 beams. For each beam numbered from 0 to 7, the following Table I gives the corresponding azimuth and elevation angles used in the simulation scenario.

Table 1: Azimuth and elevation angles (in degrees) used in the simulation scenario

| Beam | 0 | 1 | 2 | 3 | 4 | 5 | 6 | 7 |
|------|------|------|------|------|------|------|------|------|
| Azimuth | 40 | 60 | 80 | 100 | 120 | 140 | 65 | 115 |
| Elevation | - 20 | - 20 | - 20 | - 20 | - 20 | - 20 | - 35 | - 35 |

After performing simulations in "interference" and "non-interference" scenarios, the analysis of different key performance indicators (KPIs), such as the signal-to-interference-plus-noise ratio (SINR) (also known as the signal-to-noise-plus-interference ratio (SNIR)) and the modulation and coding scheme (MCS), has shown a quite significant drop on the network's performance when interference from neighboring cells was present. In more details, the results have shown that the mean value of SINR had decreased from 27dB in absence of interference to 16dB in presence of interference. For MCS, the simulations have been configured in such a manner that an MCS value of 15 and above was corresponding to a normal performance of the network, and that an MCS value below 15 was corresponding to a degraded performance. There has been approximately 4 MCS dropping below 15 per second in the non-interference scenario, against 28 MCS dropping below 15 per second in the interference scenario.

Thus, these simulation results have revealed how critical it is to manage these cross-beam inter-cell interference scenarios in order to fulfill 5G performance requirements.

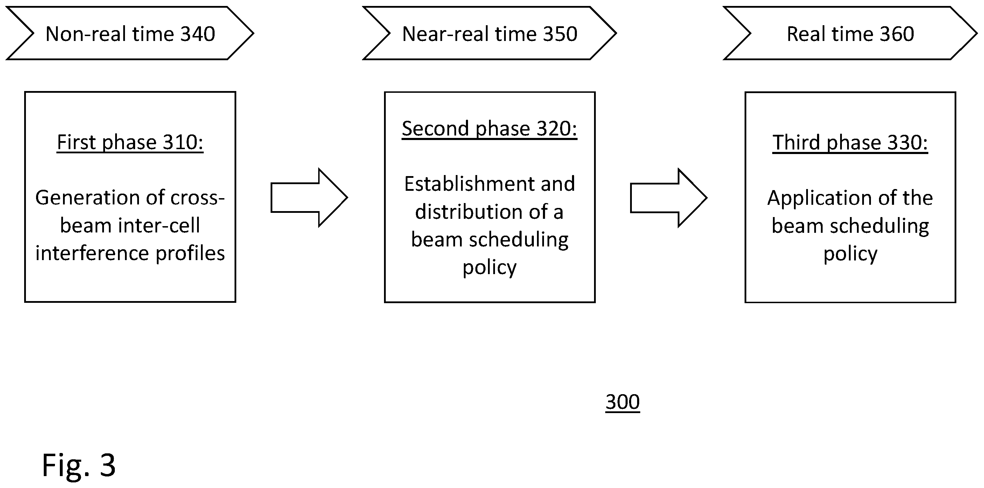

Figure 3 shows an example schematic embodiment 300 of a beams coordinated scheduling method in three subsequent phases, i.e., a first phase denoted by 310, a second phase denoted by 320, a third phase denoted by 330, with respective time scales denoted by non-real time 340, near-real time 350 and real time 360.

The first phase 310 may refer to generation of cross-beam inter-cell interference profiles. The second phase 320 may refer to establishment and distribution of a beam scheduling policy, and the third phase 330 may refer to application of the beam scheduling policy.

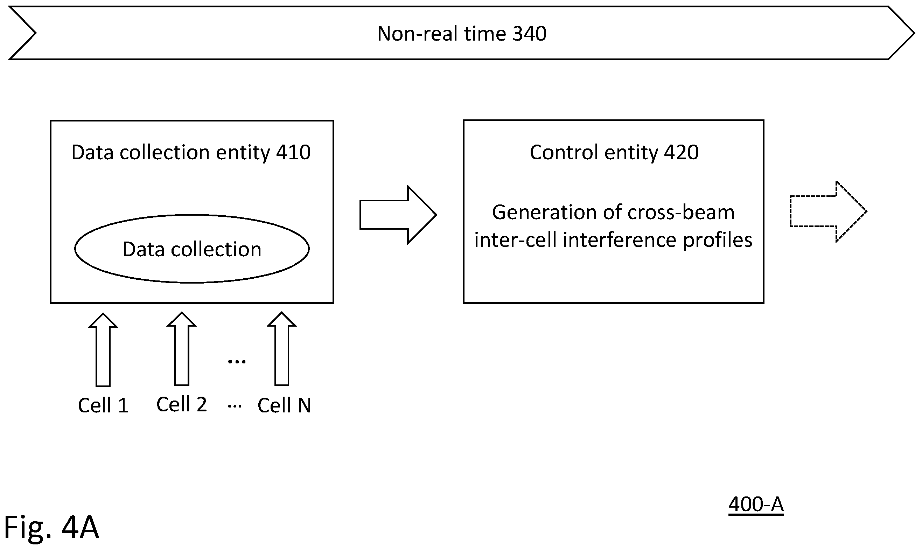

In connection with figure 3, figure 4A shows an example schematic embodiment 400-A of the first phase 310 of the beams coordinated scheduling method when running in non-real time 340.

As shown, each cell (denoted by cell 1, cell 2, ..., cell N) may transmit a time series of a respective set of data to a data collection entity 410, e.g., a 3GPP entity or any other propriety solution. These data may be collected by each cell from the data or measurements reported over time by each scheduled UE device. In an example embodiment (as shown), the data collection entity 410 may be a centralized entity that is shared by the whole cells (i.e., cell 1 to cell N). In another example embodiment (not shown), the data collection entity 410 may be a distributed entity that is split into a plurality of data collection entities respectively dedicated to each cell. Each set of data may comprise at least one or more per-cell performance measurement data, one or more per-cell serving beams of each scheduled UE device, and a time and frequency allocation of each scheduled UE device to be served by the corresponding one or more per-cell serving beams. In an example, the performance measurement data collected by each cell from each scheduled UE device may comprise KPIs such as, but not limited to, SINR or SNIR, MCS, reference signal received power (RSRP), channel quality indicator (CQI), reference signal received quality (RSRQ), number or rate of packet retransmissions through acknowledgement (ACK) and/or non-acknowledgement (NACK) reports, and open loop link adaptation (OLLA) offsets.

Useful data of the collected sets of data may be transmitted to a control entity 420. In an example embodiment, the control entity 420 may be a centralized self-organizing network (cSON) entity (or platform), and the cSON entity 420 may, for example, comprise a RAN intelligent controller (RIC) or any other propriety solution. It should be appreciated that a centralized solution based on the use of the centralized data collection entity 410 and the cSON entity 420 may avoid complex and fast coordination of the cells that would be required in the case of a distributed solution for optimally controlling scheduling decisions. The useful data may comprise the one or more per-cell performance measurement data, the one or more per-cell serving beams of each scheduled UE device, and the time and frequency allocation of each scheduled UE device to be served by the corresponding one or more per-cell serving beams. The control entity 420 may then generate a set of cross-beam inter-cell interference profiles from the received useful data. The set of cross-beam inter-cell interference profiles may comprise at least a respective interference probability for each serving beam pair of co-scheduled beams and a respective compliancy level for each set of co-scheduled beams, the co-scheduled beams comprising at least two serving beams which are each from a respective cell and which are scheduled on the same time and frequency resources.

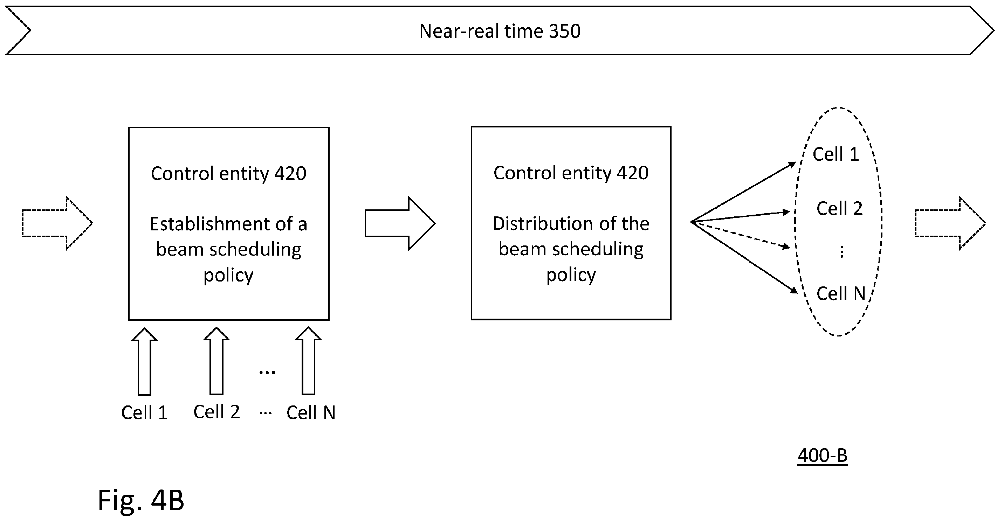

In connection with figure 3, figure 4B shows an example schematic embodiment 400-B of the second phase 320 of the beams coordinated scheduling method when running in near-real time 350.

As shown, the control entity 420 may establish (or set up) a beam scheduling policy from at least the generated set of cross-beam inter-cell interference profiles and then distribute the beam scheduling policy to each cell (denoted by cell 1, cell 2, ..., cell N). In addition to the generated set of cross-beam inter-cell interference profiles, other data reported by each cell (denoted by cell 1, cell 2, ..., cell N) to the control entity 420 may be used to establish the beam scheduling policy. These other data may relate to, for example, traffic load, beam priorities to define based on UE priorities, and so on.

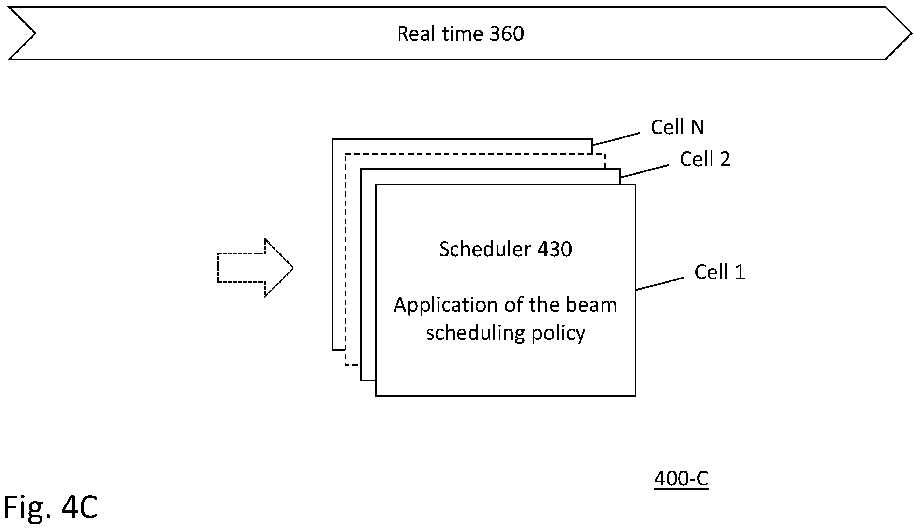

In connection with figure 3, figure 4C shows an example schematic embodiment 400-C of the third phase 330 of the beams coordinated scheduling method when running in real time 360.

As shown, the distributed beam scheduling policy may be applied in real time to each of the one or more per-cell serving beams, by a respective scheduler 430 (e.g., a gNB scheduler) at each cell (denoted by cell 1, cell 2, ..., cell N).

At the gNB level, a loop on an evaluation of update requirements may be performed to update, if needed, the beam scheduling policy, by triggering again the beams coordinated scheduling method starting from the first phase 310.

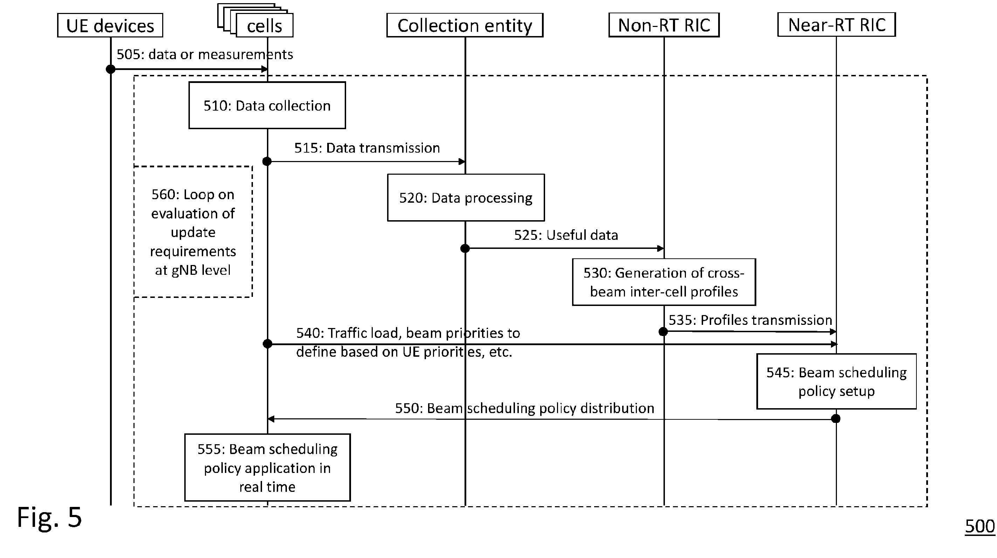

In connection with figures 3 and 4, figure 5 shows an example flowchart 500 describing an example embodiment of the beams coordinated scheduling method within an open-RAN (ORAN) framework. The flowchart 500 depicts a call flow and the message exchanges between different entities within the ORAN framework involving UE devices, serving cells, a collection entity as the data collection entity 410, and a RIC as the control entity 420 or the cSON entity 420. Therein, the RIC is designated as a non-real time RIC (denoted by non-RT RIC) when operating in the second phase 320 and as a near-real time RIC (denoted by near-RT RIC) when operating in the third phase 330. The example flowchart 500 may comprise the following steps 505 to 560.

Step 505: each scheduled UE device may report over time data or measurements to each of its serving cells.

Step 510: each of its serving cells may collect over time a respective set of data from the reported data or measurements.

Step 515: each serving cell may transmit a time series of the collected respective set of data to the collection entity through, for example, a troubleshooting interface. Each set of data may comprise at least one or more per-cell performance measurement data (e.g., KPIs), one or more per-cell serving beams of each scheduled UE device, and a time and frequency allocation of each scheduled UE device to be served by the corresponding one or more per-cell serving beams.

Step 520: The collection entity may process each of the received set of data to extract useful data. The useful data may comprise the one or more per-cell performance measurement data, the one or more per-cell serving beams of each scheduled UE device, and the time and frequency allocation of each scheduled UE device to be served by the corresponding one or more per-cell serving beams.

Step 525: The collection entity may transmit the useful data to the non-RT RIC.

Step 530: The non-RT RIC may generate a set of cross-beam inter-cell interference profiles from the received useful data. The set of cross-beam inter-cell interference profiles may comprise at least a respective interference probability for each serving beam pair of co-scheduled beams and a respective compliancy level for each set of co-scheduled beams, the co-scheduled beams comprising at least two serving beams which are each from a respective serving cell and which are scheduled on the same time and frequency resources.

Step 535: The non-RT RIC may transmit to the near-RT RIC, the generated set of cross-beam inter-cell interference profiles.

Step 540: Each serving cell may transmit to the near-RT RIC, data relating to, for example, traffic load, beam priorities to define based on UE priorities, and so on.

Step 545: The near-RT RIC may establish (or set up) a beam scheduling policy from the generated set of cross-beam inter-cell interference profiles and, optionally, from the data received from each serving cell.

Step 550: The near-RT RIC may distribute the beam scheduling policy to each serving cell.

Step 555: Each scheduler 430 (e.g., gNB scheduler) at each serving cell may apply in real time the beam scheduling policy to each of the one or more per-cell serving beams.

Step 560: At the gNB level, a loop on an evaluation of update requirements may be performed to update, if needed, the beam scheduling policy, by triggering again the beams coordinated scheduling method.

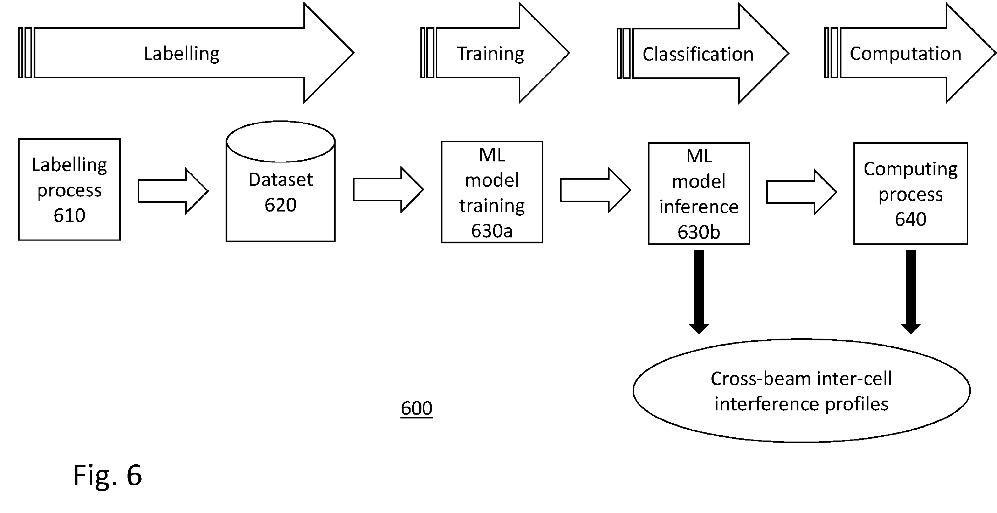

In connection with figures 3, 4A and 5 when referring to the step 530 of the first phase 310, figure 6 shows an example schematic embodiment 600 describing how the beams coordinated scheduling method when running in non-real time 340 may generate a set of cross-beam inter-cell interference profiles.

As shown, the generation of the set of cross-beam inter-cell interference profiles may comprise the following steps: labelling 610 each set of co-scheduled beams as normal or abnormal depending on the one or more per-cell performance measurement data (e.g., KPIs); training a machine learning (ML) model 630a using a dataset 620 comprising each labelled set of co-scheduled beams and the one or more per-cell performance measurement data as to obtain a trained ML model 630b once the training of the ML learning model 630a has terminated; using the (inference of the) trained ML model 630b on the one or more per-cell performance measurement data per new realization of co-scheduled beams to classify each set of co-scheduled beams as normal or abnormal depending on their respective compliancy level; and computing 640 the respective interference probability for each serving beam pair of co-scheduled beams.

The ML model 630a, 630b may be a supervised ML model that may comprise a neural network (NN) or an artificial neural network (ANN) model, itself comprising, for example, but not limited to, a deep neural network (DNN) (also known as feedforward neural network (FNN) or multilayer perceptron) model, a recurrent neural network (RNN) model, or a convolutional neural network (CNN) model.

The compliancy level may be correlated to a cross-beam inter-cell interference level and to the one or more per-cell performance measurement data, wherein each set of co-scheduled beams is classified as abnormal when the respective compliancy level is correlated to a high cross-beam inter-cell interference level and as normal when the respective compliancy level is correlated to a low cross-beam inter-cell interference level.

Referring to figure 6, the step of labelling each set of co-scheduled beams as normal or abnormal depending on the one or more per-cell performance measurement data may be based on an anomaly detection. In a non-limiting example, the anomaly detection may comprise a first anomaly detection based on detection (or identification) of outlier(s) from observed per-cell performance measurement data (e.g., KPIs). In another non-limiting example, the anomaly detection may comprise a second anomaly detection based on data clustering. The data clustering may comprise, for example, but not limited to, K-means clustering, density-based spatial clustering of applications with noise (DBSCAN), Gaussian mixture model clustering, spectral clustering and agglomerative clustering.

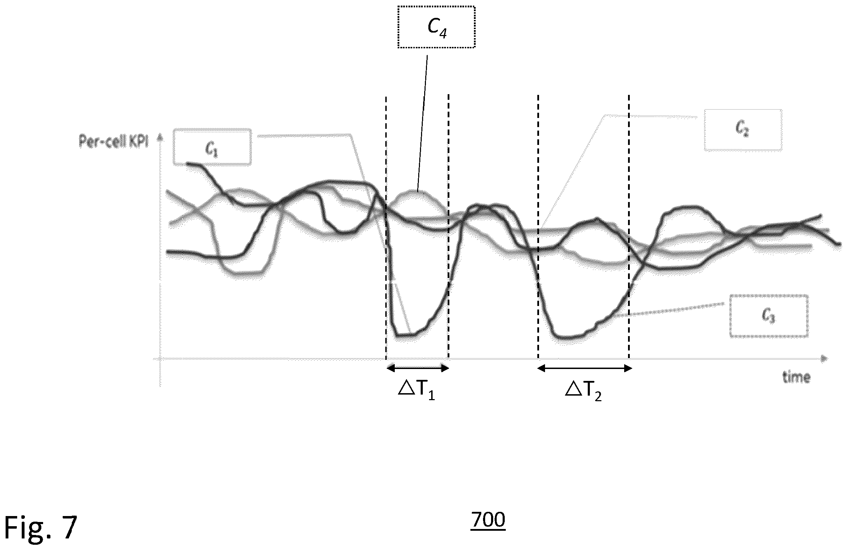

Figure 7 shows an example embodiment 700 of a per-cell KPI for a set of co-scheduled beams from a respective cell $C_1$, $C_2$, $C_3$ or $C_4$ plotted against time for illustrating the case of an example first anomaly detection.

As depicted, the beam scheduled in the cell $C_1$ corresponds during the time slot denoted by $\Delta T_1$ to a detected (or identified) KPI drop, which detected KPI drop may then be considered an outlier, with respect to the respective KPI corresponding to the other beams co-scheduled in the cells $C_2$, $C_3$ and $C_4$. This thereby means that the beam scheduled during this time slot $\Delta T_1$ in the cell $C_1$ is impacted by the beams transmitted by the other (neighboring) cells $C_2$ to $C_4$ during the same time slot $\Delta T_1$. As further depicted, the beam scheduled in the cell $C_3$ corresponds during a time slot denoted by $\Delta T_2$ to a detected (or identified) KPI drop, which detected KPI drop may then be considered an outlier, with respect to the respective KPI corresponding to the other beams co-scheduled in the cells $C_1$, $C_2$ and $C_4$. This thereby means that the beam scheduled during this time slot $\Delta T_2$ in the cell $C_3$ is impacted by the beams transmitted by the other (neighboring) cells $C_1$, $C_2$ and $C_4$ during the same time slot $\Delta T_2$. Although each of the example time slots $\Delta T_1$ and $\Delta T_2$ encompasses a plurality of times, it shall be understood that in the example case where a time slot $\Delta T$ has a minimum width, the time slot $\Delta T$ can then designate a single time t.

More generally, once an outlier has been detected (or identified) at a first time slot based on the one or more per-cell performance measurement data, it may be determined whether or not the detected outlier is associated with a performance degradation. The set of co-scheduled beams (i.e., the set of beams scheduled at the same first time slot) corresponding to the outlier having been detected at the first time slot may be labelled as abnormal for the first time slot when the detected outlier is associated with the performance degradation, as it is the case, for example, for the outliers of figure 7 which have been detected at $\Delta T_1$ and $\Delta T_2$. The set of co-scheduled beams corresponding to the outlier having been detected at the first time slot may be labelled as normal for the first time slot when the detected outlier is not associated with the performance degradation. And each other set of co-scheduled beams corresponding to no outlier having been detected at a second time slot may be labelled as normal for the second time slot.

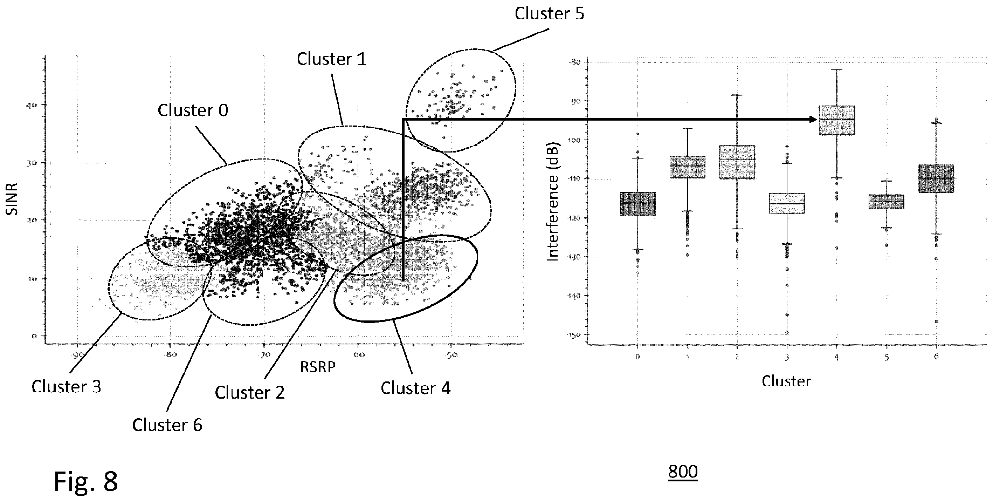

Figure 8 shows an example embodiment 800 of data clustering based on SINR and RSRP along with interference quartiles plotted against the corresponding clusters for illustrating the case of an example second anomaly detection.

As depicted, the RSRP and SINR as KPIs were used to form seven clusters (numbered from 0 to 6) of simulated data. The cluster 4 has been detected (or identified) as presenting an anomaly with respect to the other clusters 0, 1, 2, 3, 5, 6 because it presents low SINR and high RSRP simultaneously, which may then stand for interference situations. Thus, the detected (or identified) cluster 4 may be labelled as abnormal. From the plotted interference quartiles per cluster, it can be inferred that the cluster 4 corresponds to the highest noticed median interference value, thereby indicating that the interference is indeed the source of the abnormal behavior of this cluster 4.

More generally, once a data cluster has been formed from the one or more per-cell performance measurement data, it may be determined whether or not the data cluster is associated with a performance degradation. Each set of co-scheduled beams (i.e., each set of beams scheduled at a same time slot) corresponding to the data of the data cluster may be labelled as abnormal for the time slot when the data cluster is associated with the performance degradation, as it is the case, for example, for the cluster 4 of figure 8. Each set of co-scheduled beams corresponding to the data of the data cluster may be labelled as normal for the time slot when the data cluster is not associated with the performance degradation, as it may be the case, for example, for the clusters 0, 1, 2, 3, 5, 6 of figure 8.

Referring to figure 6, the step of computing the respective interference probability P for each serving beam pair of co-scheduled beams $(B_i, B_j)$ may comprise computing the following relationship (1):

$$P\left(\text{interference}\middle|B_i \text{ and } B_j \text{ are scheduled}\right) = \frac{P(\text{interference} \cap B_i \text{ and } B_j \text{ are scheduled})}{P(B_i \text{ and } B_j \text{ are scheduled})} \quad (1)$$

where $i \in$ cell m and $j \in$ cell n with $m \neq n$.

The interference probability P may be determined low when its value is below a predetermined threshold value, and determined high when its value is above the predetermined threshold value.

In connection with figures 3, 4B and 5 when referring to the step 545 of the second phase 320, the step of establishing a beam scheduling policy may comprise building a pattern of beam penalties which are to be applied per cell to each of the one or more per-cell serving beams in order to selectively limit a use of one or more co-scheduled beams from respective cells on identical time and frequency resources.

The pattern may comprise one of a space time pattern, a space frequency pattern, and a space time and frequency pattern.

The building of the pattern of beam penalties may rest on the principle of switching from the cross-beam inter-cell interference profiles to the pattern of beam penalties.

In an example embodiment, let $p_{i,m}$ the penalty to apply on the beam i $(B_i)$ in the cell m, and let $p_{j,n}$ the penalty to apply on the beam j $(B_j)$ in the cell n.

It is then admitted that the absolute value of the difference between $p_{i,m}$ and $p_{j,n}$ is a an increasing monotonically function of the interference probability P for each serving beam pair of co-scheduled beams $(B_i, B_j)$. Mathematically speaking, it corresponds to the following relationship (2):

$$|p_{i,m} - p_{j,n}| = f(P(\text{interference}|B_i \text{ and } B_j \text{ are scheduled})) \quad (2)$$

where f is an increasing monotonically function.

Thus, if P(interference|$B_i$ and $B_j$ are scheduled) is high, then a low penalty $p_{i,m}$ on $B_i$ implies a high penalty $p_{j,n}$ on $B_j$, or then a high penalty $p_{i,m}$ on $B_i$ implies a low penalty $p_{j,n}$ on $B_j$.

Thereby, the use of these co-scheduled beams $B_i$ and $B_j$ on the same time and frequency resources may be selectively limited.

Based on it, the pattern of beam penalties may be built by swapping the high and low penalties per group of the most interfering cells, so that no beam may be favored compared to others on the long term thanks to the pattern application.

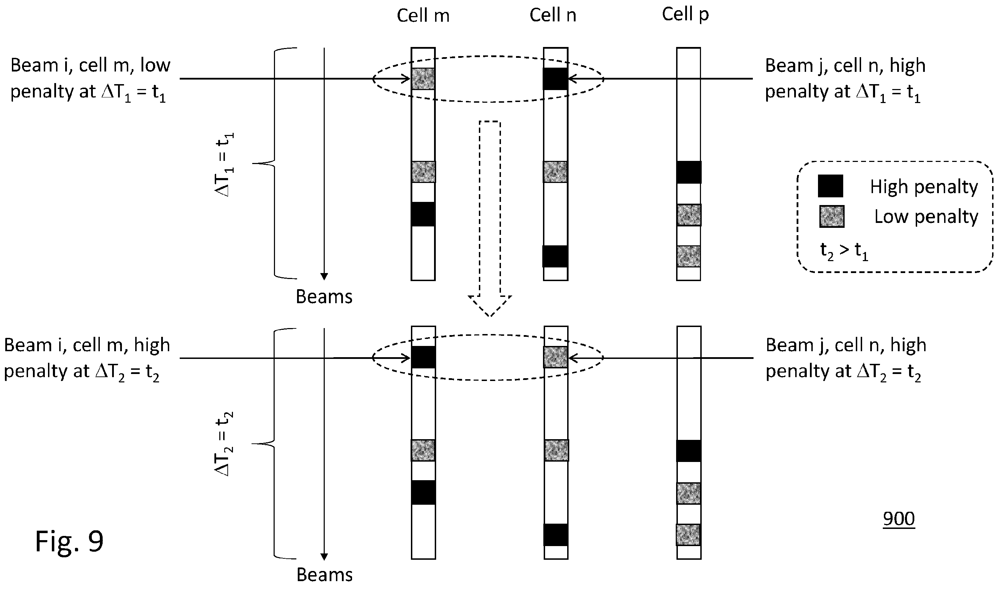

Figure 9 shows an example schematic embodiment 900 of a space time pattern of beam penalties.

As exemplarily depicted, a low penalty is applied on the beam i ($B_i$) in the cell m and a high penalty is applied on the beam j ($B_j$) in the cell n at a time slot $\Delta T_1 = t_1$. Then, at a subsequent time slot $\Delta T_2 = t_2$ (where $t_2 > t_1$), the penalties are swapped such that a high penalty is applied on the beam i ($B_i$) in the cell m and a low penalty is applied on the beam j ($B_j$) in the cell n.

More generally, when an interference probability is determined high for a serving beam pair of co-scheduled beams including a first serving beam from a cell and a second serving beam from another cell, the step of building a pattern of beam penalties may either comprise:

- assigning a high level of beam penalty to the first serving beam and a low level of beam penalty to the second serving beam at a given slot, so as to limit a use of the first serving beam with respect to the second serving beam during the given slot; and assigning a low level of beam penalty to the first serving beam and a high level of beam penalty to the second serving beam at another slot subsequent to the given slot, so as to limit a use of the second serving beam with respect to the first serving beam during said another slot, wherein the slot may comprise at least one of a time slot and a frequency slot,

or comprise:

- assigning a low level of beam penalty to the first serving beam and a high level of beam penalty to the second serving beam at a given slot, so as to limit a use of the second serving beam with respect to the first serving beam during the given slot; and assigning a high level of beam penalty to the first serving beam and a low level of beam penalty to the second serving beam at another slot subsequent to the given slot, so as to limit a use of the first serving beam with respect to the second serving beam during said another slot, wherein the slot comprises at least one of a time slot and a frequency slot.

In connection with figures 3, 4C and 5 when referring to the step 555 of the third phase 330, the step of applying the beam scheduling policy to each of the one or more per-cell serving beams may comprise determining, by the respective scheduler (e.g., gNB scheduler) at each cell, which UE device and corresponding serving beam to schedule based on at least the pattern of beam penalties. Indeed, the beams serving each UE device are set according to a conventional beam management procedure and, at each cell, the respective scheduler then decides which UE device and related serving beam to schedule based on this beam scheduling policy to apply. Thus, the use of each beam per cell may be limited according to the built pattern of beam penalties.

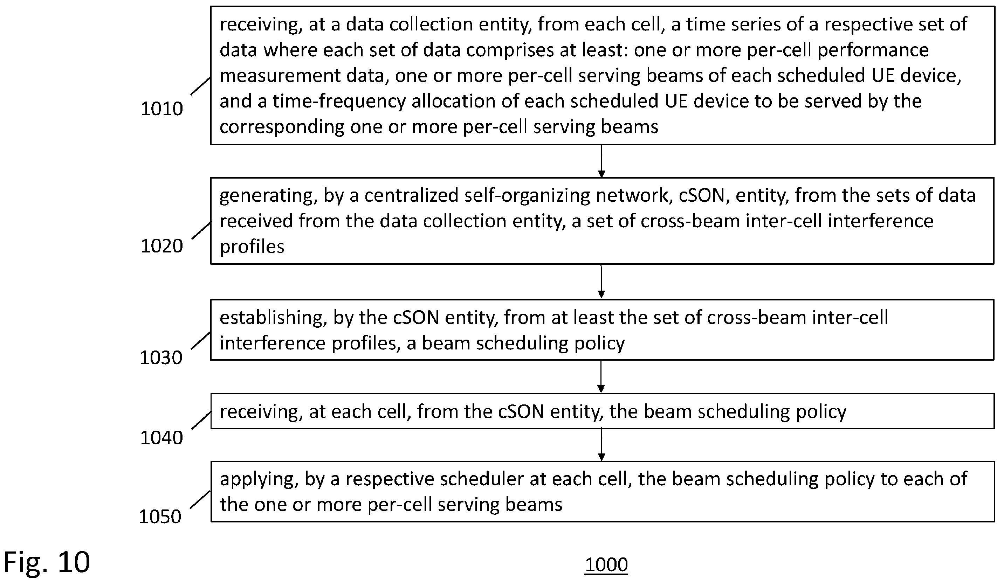

Figure 10 shows an example flowchart 1000 describing the beams coordinated scheduling method of figure 3 implemented at a system level.

In step 1010, the method may comprise means for receiving, at a data collection entity 410, from each cell, a time series of a respective set of data where each set of data comprises at least: one or more per-cell performance measurement data, one or more per-cell serving beams of each scheduled UE device, and a time and frequency allocation of each scheduled UE device to be served by the corresponding one or more per-cell serving beams.

In step 1020, the method may comprise means for generating, by a cSON entity 420, from the sets of data received from the data collection entity 410, a set of cross-beam inter-cell interference profiles.

In step 1030, the method may comprise means for establishing, by the cSON entity 420, from at least the set of cross-beam inter-cell interference profiles, a beam scheduling policy.

In step 1040, the method may comprise means for receiving, at each cell, from the cSON entity 420, the beam scheduling policy.

In step 1050, the method may comprise applying, by a respective scheduler 430 at each cell, the beam scheduling policy to each of the one or more per-cell serving beams.

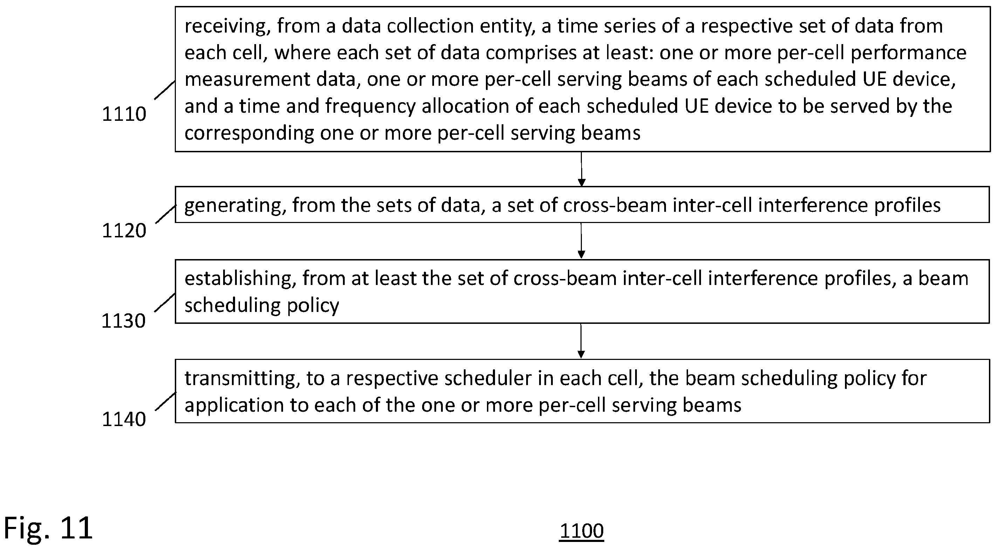

Figure 11 shows an example flowchart 1100 describing the beams coordinated scheduling method of figure 3 implemented at a device level. The device may be the control entity 420 or the cSON entity 420.

In step 1110, the method may comprise means for receiving, from a data collection entity 410, a time series of a respective set of data from each cell, where each set of data comprises at least: one or more per-cell performance measurement data, one or more per-cell serving beams of each scheduled UE device, and a time and frequency allocation of each scheduled UE device to be served by the corresponding one or more per-cell serving beams.

In step 1120, the method may comprise means for generating, from the sets of data, a set of cross-beam inter-cell interference profiles.

In step 1130, the method may comprise means for establishing, from at least the set of cross-beam inter-cell interference profiles, a beam scheduling policy.

In step 1140, the method may comprise means for transmitting, to a respective scheduler 430 in each cell, the beam scheduling policy for application to each of the one or more per-cell serving beams.

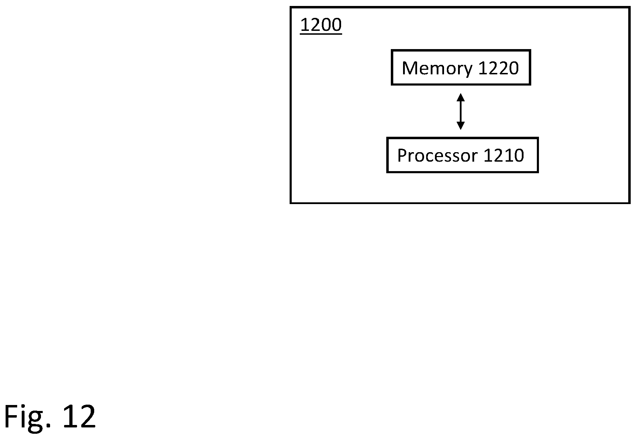

Figure 12 shows an example embodiment of an apparatus 1200. The apparatus 1200 may comprise at least one processor 1210 and at least one memory 1220 comprising computer program code. At the system level, the at least one memory and the computer program code may be configured, with the at least one processor, to cause the steps of the example flowchart 1000 to be performed. At the device level, the at least one memory and the computer program code may be configured, with the at least one processor, to cause the steps of the example flowchart 1100 to be performed.

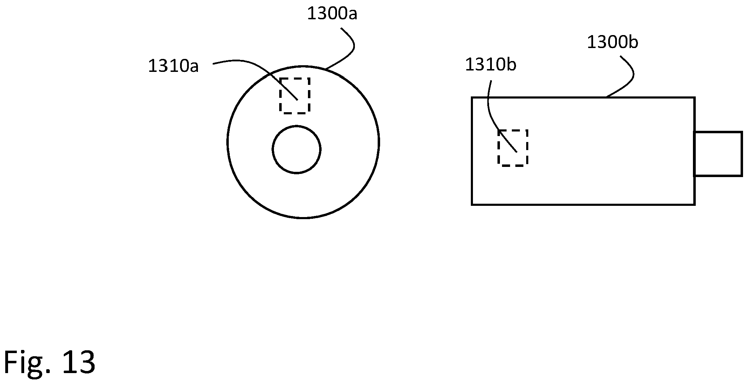

Figure 13 shows an example embodiment of computer readable media, such as non-transitory computer readable media 1300a (e.g., a computer disc (CD) or a digital versatile disc (DVD)) and 1300b (e.g., a universal serial bus (USB) memory stick), which may be configured to store instructions and/or parameters 1310a, 1310b that, when executed by a processor, may allow the processor to perform one or more of the steps of any of the methods of any of the example embodiments.

In summary, the proposed solution may allow to avoid any inter-cell beam collision using an adequate ML-assisted beams coordinated scheduling which may selectively limit the use of co-scheduled beams on identical time and frequency resources thanks to application, by a respective scheduler at each cell, of an established (or setup) beam scheduling policy.

It should be noted that the cross-beam inter-cell interference profiles may be used not only for the proposed ML-assisted beams coordinated scheduling to mitigate inter-cell interference, but also for optimization of the beam pattern.

It should be appreciated that, while the above has described some example embodiments, there are several variations and modifications which may be made to the disclosed solution without departing from the scope of the present application as defined by the appended claims.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

**1.** A method comprising:

receiving at a centralized self-organizing network entity (420), from a data collection entity (410), a time series of a respective set of data from each cell, where each set of data comprises at least: one or more per-cell performance measurement data, one or more per-cell serving beams of each scheduled user equipment device, and a time and frequency allocation of each scheduled user equipment device to be served by the corresponding one or more per-cell serving beams;

generating by the centralized self-organizing network entity (420), from the sets of data, a set of cross-beam inter-cell interference profiles;

establishing by the centralized self-organizing network entity (420), from at least the set of cross-beam inter-cell interference profiles, a beam scheduling policy; and

transmitting by the centralized self-organizing network entity (420), to a respective scheduler (430) in each cell, the beam scheduling policy for application to each of the one or more per-cell serving beams.

2. The method of claim 1 further comprising:

receiving, at the data collection entity (410), from each cell, the time series of the respective set of data;
receiving, at each cell, from the centralized self-organizing network entity (420), the beam scheduling policy; and
applying, by the respective scheduler (430) at each cell, the beam scheduling policy to each of the one or more per-cell serving beams.

3. The method of claim 1 or 2, wherein the set of cross-beam inter-cell interference profiles comprises at least a respective interference probability for each serving beam pair of co-scheduled beams and a respective compliancy level for each set of co-scheduled beams, the co-scheduled beams comprising at least two serving beams which are each from a respective cell and which are scheduled on the same time and frequency resources.

4. The method of claim 3, wherein the step of generating a set of cross-beam inter-cell interference profiles comprises at least:

labelling each set of co-scheduled beams as normal or abnormal depending on the one or more per-cell performance measurement data;
training a machine learning model (630a) using each labelled set of co-scheduled beams and the one or more per-cell performance measurement data, as to obtain a trained machine learning model (630b);
using the trained machine learning model (630b) on the one or more per-cell performance measurement data per realization of co-scheduled beams to classify each set of co-scheduled beams as normal or abnormal depending on their respective compliancy level; and
computing the respective interference probability for each serving beam pair of co-scheduled beams.

5. The method of claim 4, wherein the compliancy level is correlated to a cross-beam inter-cell interference level and to the one or more per-cell performance measurement data, each set of co-scheduled beams being classified as abnormal when the respective compliancy level is correlated to a high cross-beam inter-cell interference level and as normal when the respective compliancy level is correlated to a low cross-beam inter-cell interference level.

6. The method of claim 4 or 5, wherein the step of labelling each set of co-scheduled beams as normal or abnormal depending on the one or more per-cell performance measurement data is based at least:
on a first anomaly detection by:

detecting an outlier based on the one or more per-cell performance measurement data;
determining whether or not the detected outlier is associated with a performance degradation;
labelling the set of co-scheduled beams corresponding to the detected outlier as abnormal when the detected outlier is associated with the performance degradation;
labelling the set of co-scheduled beams corresponding to the detected outlier as normal when the detected outlier is not associated with the performance degradation; and
labelling each other set of co-scheduled beams corresponding to no detected outlier as normal,
and/or
on a second anomaly detection by:

forming a data cluster from the one or more per-cell performance measurement data;
determining whether or not the data cluster is associated with a performance degradation;
labelling each set of co-scheduled beams corresponding to the data of the data cluster as abnormal when the data cluster is associated with the performance degradation; and
labelling each set of co-scheduled beams corresponding to the data of the data cluster as normal when the data cluster is not associated with the performance degradation.

7. The method of any of claims 3 to 6, wherein the step of establishing a beam scheduling policy comprises: building a pattern of beam penalties which are to be applied per cell to each of the one or more per-cell serving beams in order to selectively limit a use of one or more co-scheduled beams from respective cells on the same time and frequency resources.

8. The method of claim 7, wherein the pattern comprises one of a space time pattern, a space frequency pattern, and a space time and frequency pattern.

9. The method of claim 7 or 8, wherein the step of building a pattern of beam penalties comprises, when an interference probability is determined high for a serving beam pair of co-scheduled beams including a first serving beam from a cell and a second serving beam from another cell:

assigning a high level of beam penalty to the first serving beam and a low level of beam penalty to the second serving beam at a given slot, so as to limit a use of the first serving beam with respect to the second serving beam during the given slot; and
assigning a low level of beam penalty to the first serving beam and a high level of beam penalty to the second serving beam at another slot subsequent to the given slot, so as to limit a use of the second serving beam with respect to the first serving beam during said another slot, wherein the slot comprises at least one of a time slot and a frequency slot,
or
assigning a low level of beam penalty to the first serving beam and a high level of beam penalty to the second serving beam at a given slot, so as to limit a use of the second serving beam with respect to the first serving beam during the given slot; and
assigning a high level of beam penalty to the first serving beam and a low level of beam penalty to the second serving beam at another slot subsequent to the given slot, so as to limit a use of the first serving beam with respect to the second serving beam during said another slot, wherein the slot comprises at least one of a time slot and a frequency slot.

10. The method of any of claims 7 to 9, wherein the step of applying the beam scheduling policy to each of the one or more per-cell serving beams comprises:
determining, by the respective scheduler (430) at each cell, which user equipment device and corresponding serving beam to schedule based on at least the pattern of beam penalties.

11. A centralized self-organizing network entity (420) comprising means at least for:

receiving, from a data collection entity (410), a time series of a respective set of data from each cell, where each set of data comprises at least: one or more per-cell performance measurement data, one or more per-cell serving beams of each scheduled user equipment device, and a time and frequency allocation of each scheduled user equipment device to be served by the corresponding one or more per-cell serving beams;
generating, from the sets of data, a set of cross-beam inter-cell interference profiles;
establishing, from at least the set of cross-beam inter-cell interference profiles, a beam scheduling policy; and
transmitting, to a respective scheduler (430) in each cell, the beam scheduling policy for application to each of the one or more per-cell serving beams.

12. The centralized self-organizing network entity of claim 11 wherein the means comprises:

at least one processor; and
at least one memory comprising computer program code,

wherein the at least one memory and the computer program code are configured, with the at least one processor, to cause the performance of the centralized self-organizing network entity.

13. A system comprising:

the centralized self-organizing network entity (420) of claims 11 or 12; and
means at least for:

receiving, at the data collection entity (410), from each cell, the time series of a respective set of data;
receiving, at each cell, from the centralized self-organizing network entity (420), the beam scheduling policy; and
applying, by the respective scheduler (430) at each cell, the beam scheduling policy to each of the one or more per-cell serving beams.

14. The system of claim 13 wherein the means comprises:

at least one processor; and
at least one memory comprising computer program code,

wherein the at least one memory and the computer program code are configured, with the at least one processor, to cause the performance of the system.

15. A computer readable medium comprising program instructions stored thereon for performing the method of any one of claims 1 to 10 when executed by a centralised self-organizing network entity (420).

**Patentansprüche**

1. Verfahren, das Folgendes umfasst:

Empfangen einer Zeitreihe eines jeweiligen Satzes von Daten von jeder Zelle an einer zentralisierten selbstorganisierenden Netzwerkentität (420) von einer Datensammlungsentität (410), wo jeder Satz von Daten mindestens Folgendes umfasst: ein oder mehrere Leistungsmessdaten pro Zelle, einen oder mehrere bedienende Strahlen pro Zelle von jeder geplanten Teilnehmereinrichtungsvorrichtung und eine Zeit- und Frequenzzuteilung jeder geplanten Teilnehmereinrichtungsvorrichtung, die von dem einen oder den mehreren entsprechenden bedienenden Strahlen pro Zelle zu bedienen ist;
Erzeugen eines Satzes von Querstrahlzwischenzellinterferenzprofilen durch die zentralisierte selbstorganisierende Netzwerkentität (420) aus den Sätzen von Daten;
Einrichten einer Strahlplanungsrichtlinie durch die zentralisierte selbstorganisierende Netzwerkentität (420) mindestens aus den Querstrahlzwischenzellinterferenzprofilen und
Übertragen der Strahlplanungsrichtlinie zur Anwendung auf jeden des einen oder der mehreren bedienenden Strahlen pro Zelle durch die zentralisierte selbstorganisierende Netzwerkentität (420) zu einem jeweiligen Planer (430) in jeder Zelle.

2. Verfahren nach Anspruch 1, das ferner Folgendes umfasst:
Empfangen der Zeitreihe des jeweiligen Satzes von Daten an der Datensammlungsentität (410) von jeder Zelle;

Empfangen der Strahlplanungsrichtlinie an jeder Zelle von der zentralisierten selbstorganisierenden Netzwerkentität (420) und
Anwenden der Strahlplanungsrichtlinie durch den jeweiligen Planer (430) an jeder Zelle auf jeden des einen oder der mehreren bedienenden Strahlen pro Zelle.

3. Verfahren nach Anspruch 1 oder 2, wobei der Satz von Querstrahlzwischenzellinterferenzprofilen mindestens eine jeweilige Interferenzwahrscheinlichkeit für jedes bedienende Strahlpaar von gleichzeitig geplanten Strahlen und ein jeweiliges Konformitätsniveau für jeden Satz von gleichzeitig geplanten Strahlen umfasst, wobei die gleichzeitig geplanten Strahlen mindestens zwei bedienende Strahlen umfassen, die von einer jeweiligen Zelle kommen und die in den selben Zeit- und Frequenzressourcen geplant sind.

4. Verfahren nach Anspruch 3, wobei der Schritt des Erzeugens eines Satzes von Querstrahlzwischenzellinterferenzprofilen mindestens Folgendes umfasst:

Markieren jedes Satzes von gleichzeitig geplanten Strahlen in Abhängigkeit von dem einen oder den mehreren Leistungsmessdaten pro Zelle als normal oder unnormal;

Trainieren eines Maschinenlernmodells (630a) unter Verwendung von jedem Satz von gleichzeitig geplanten Strahlen und des einen oder der mehreren Leistungsmessdaten pro Zelle, um ein trainiertes Maschinenlernmodell (630b) zu erhalten;

Verwenden des trainierten Maschinenlernmodells (630b) an dem einen oder den mehreren Leistungsmessdaten pro Zelle durch Realisieren von gleichzeitig geplanten Strahlen, um jeden Satz von gleichzeitig geplanten Strahlen in Abhängigkeit von deren jeweiligem Konformitätsniveau als normal oder unnormal zu klassifizieren; und

Berechnen der jeweiligen Interferenzwahrscheinlichkeit für jedes bedienende Strahlpaar von gleichzeitig geplanten Strahlen.

5. Verfahren nach Anspruch 4, wobei das Konformitätsniveau mit einem Querstrahlinterzellinterferenzniveau und mit dem einen oder den mehreren Leistungsmessdaten pro Zelle korreliert, wobei jeder Satz von gleichzeitig geplanten Strahlen als unnormal klassifiziert wird, wenn das jeweilige Konformitätsniveau mit einem hohen Querstrahlinterzellinterferenzniveau korreliert, und als normal, wenn das jeweilige Konformitätsniveau mit einem niedrigen Querstrahlinterzellinterferenzniveau korreliert.

6. Verfahren nach Anspruch 4 oder 5, wobei der Schritt des Markierens jedes Satzes von gleichzeitig geplanten Strahlen in Abhängigkeit von dem einen oder den mehreren Leistungsmessdaten pro Zelle als normal oder unnormal mindestens auf Folgendem basiert:

auf einer ersten Anomaliedetektion durch Folgendes:

Detektieren eines Ausreißers auf Basis des einen oder der mehreren Leistungsmessdaten pro Zelle;
Bestimmen, ob der detektierte Ausreißer mit einer Leistungsverschlechterung verknüpft ist oder nicht;
Markieren des Satzes von gleichzeitig geplanten Strahlen, der dem detektierten Ausreißer entspricht, als unnormal, wenn der detektierte Ausreißer mit der Leistungsverschlechterung verknüpft ist;
Markieren des Satzes von gleichzeitig geplanten Strahlen, der dem detektierten Ausreißer entspricht, als normal, wenn der detektierte Ausreißer nicht mit der Leistungsverschlechterung verknüpft ist; und
Markieren jedes anderen Satzes von gleichzeitig geplanten Strahlen, der keinem detektierten Ausreißer entspricht, als normal,
und/oder
auf einer zweiten Anomaliedetektion durch Folgendes:

Bilden eines Datenclusters aus dem einen oder den mehreren Leistungsmessdaten pro Zelle;
Bestimmen, ob der Datencluster mit einer Leistungsverschlechterung verknüpft ist oder nicht;
Markieren von jedem Satz von gleichzeitig geplanten Strahlen, der den Daten des Datenclusters entspricht, als unnormal, wenn der Datencluster mit der Leistungsverschlechterung verknüpft ist; und
Markieren von jedem Satz von gleichzeitig geplanten Strahlen, der den Daten des Datenclusters entspricht, als normal, wenn der Datencluster nicht mit der Leistungsverschlechterung verknüpft ist.

7. Verfahren nach einem der Ansprüche 3 bis 6, wobei der Schritt des Einrichtens einer Strahlplanungsrichtlinie Folgendes umfasst:
Aufbauen eines Musters von Strahlstrafen, die pro Zelle auf jeden des einen oder der mehreren bedienenden Strahlen pro Zelle anzuwenden sind, um eine Verwendung von einem oder mehreren gleichzeitig geplanten Strahlen von jeweiligen Zellen in denselben Zeit- und Frequenzressourcen zu begrenzen.

8. Verfahren nach Anspruch 7, wobei das Muster eines von einem Raumzeitmuster, einem Raumfrequenzmuster und einem Raumzeit- und -frequenzmuster umfasst.

9. Verfahren nach Anspruch 7 oder 8, wobei der Schritt des Aufbauens eines Musters von Strahlstrafen Folgendes umfasst, wenn eine Interferenzwahrscheinlichkeit für ein bedienendes Strahlpaar von gleichzeitig geplanten Strahlen, die einen ersten Strahl von einer Zelle und einen zweiten Strahl von einer anderen Zelle beinhalten, als hoch bestimmt wird:

Zuweisen eines hohen Maßes einer Strahlstrafe zum ersten bedienenden Strahl und eines niedrigen Maßes einer Strahlstrafe zum zweiten bedienenden Strahl an einem gegebenen Schlitz, um eine Verwendung des ersten bedienenden Strahls mit Bezug auf den zweiten bedienenden Strahl während des gegebenen Schlitzes zu begrenzen; und
Zuweisen eines niedrigen Maßes einer Strahlstrafe zum ersten bedienenden Strahl und eines hohen Maßes einer Strahlstrafe zum zweiten bedienenden Strahl an einem anderen Schlitz, der dem gegebenen Schlitz folgt, um eine Verwendung des zweiten bedienenden Strahls mit Bezug auf den ersten bedienenden Strahl während des anderen Schlitzes zu begrenzen, wobei der Schlitz mindestens eines von einem Zeitschlitz und einem Frequenzschlitz umfasst,

oder

Zuweisen eines niedrigen Maßes einer Strahlstrafe zum ersten bedienenden Strahl und eines hohen Maßes einer Strahlstrafe zum zweiten bedienenden Strahl an einem gegebenen Schlitz, um eine Verwendung des zweiten bedienenden Strahls mit Bezug auf den ersten bedienenden Strahl während des gegebenen Schlitzes zu begrenzen; und

Zuweisen eines hohen Maßes einer Strahlstrafe zum ersten bedienenden Strahl und eines niedrigen Maßes einer Strahlstrafe zum zweiten bedienenden Strahl an einem anderen Schlitz, der dem gegebenen Schlitz folgt, um eine Verwendung des ersten bedienenden Strahls mit Bezug auf den zweiten bedienenden Strahl während des anderen Schlitzes zu begrenzen, wobei der Schlitz mindestens eines von einem Zeitschlitz und einem Frequenzschlitz umfasst.

10. Verfahren nach einem der Ansprüche 7 bis 9, wobei der Schritt des Anwendens der Strahlplanungsrichtlinie auf jeden des einen oder der mehreren bedienenden Strahlen pro Zelle Folgendes umfasst:
Bestimmen mindestens auf Basis des Musters von Strahlstrafen, welche Teilnehmereinrichtungsvorrichtung und welcher entsprechende bedienende Strahl zu planen ist, durch den jeweiligen Planer (430) an jeder Zelle.

11. Zentralisierte selbstorganisierende Netzwerkentität (420), die Mittel mindestens für Folgendes umfasst:

Empfangen einer Zeitreihe eines jeweiligen Satzes von Daten von jeder Zelle von einer Datensammlungsentität (410), wo jeder Satz von Daten mindestens Folgendes umfasst: ein oder mehrere Leistungsmessdaten pro Zelle, einen oder mehrere bedienende Strahlen pro Zelle von jeder geplanten Teilnehmereinrichtungsvorrichtung und eine Zeit- und Frequenzzuteilung jeder geplanten Teilnehmereinrichtungsvorrichtung, die von dem einen oder den mehreren entsprechenden bedienenden Strahlen pro Zelle zu bedienen ist;
Erzeugen eines Satzes von Querstrahlzwischenzellinterferenzprofilen aus den Sätzen von Daten;
Einrichten einer Strahlplanungsrichtlinie mindestens aus den Querstrahlzwischenzellinterferenzprofilen und Übertragen der Strahlplanungsrichtlinie zur Anwendung auf jeden des einen oder der mehreren bedienenden Strahlen pro Zelle zu einem jeweiligen Planer (430) in jeder Zelle.

12. Zentralisierte selbstorganisierende Netzwerkentität nach Anspruch 11, wobei die Mittel Folgendes umfassen:

mindestens einen Prozessor und
mindestens einen Speicher, der einen Computerprogrammcode umfasst,
wobei der mindestens eine Speicher und der Computerprogrammcode dazu ausgelegt sind, mit dem mindestens einen Prozessor die Durchführung der zentralisierten selbstorganisierenden Netzwerkentität zu veranlassen.

13. System, das Folgendes umfasst:

die zentralisierte selbstorganisierende Netzwerkentität (420) nach Anspruch 11 oder 12 und
Mittel für mindestens Folgendes:

Empfangen der Zeitreihe eines jeweiligen Satzes von Daten an der Datensammlungsentität (410) von jeder Zelle;
Empfangen der Strahlplanungsrichtlinie an jeder Zelle von der zentralisierten selbstorganisierenden Netzwerkentität (420) und
Anwenden der Strahlplanungsrichtlinie durch den jeweiligen Planer (430) an jeder Zelle auf jeden des einen oder der mehreren bedienenden Strahlen pro Zelle.

14. System nach Anspruch 13, wobei die Mittel Folgendes umfassen:

mindestens einen Prozessor und
mindestens einen Speicher, der einen Computerprogrammcode umfasst,
wobei der mindestens eine Speicher und der Computerprogrammcode dazu ausgelegt sind, mit dem mindestens einen Prozessor die Durchführung des Systems zu veranlassen.

**15.** Computerlesbares Medium, auf dem Programmanweisungen zum Durchführen des Verfahrens nach einem der Ansprüche 1 bis 10, wenn sie von einer zentralisierten selbstorganisierenden Netzwerkentität (420) ausgeführt werden, gespeichert sind.

**Revendications**

**1.** Procédé comprenant les étapes suivantes :

au niveau d'une entité de réseau autoorganisée centralisée (420), recevoir d'une entité de collecte de données (410) une série chronologique d'un ensemble respectif de données provenant de chaque cellule, où chaque ensemble de données comprend au moins : une ou plusieurs données de mesure de performance par cellule, un ou plusieurs faisceaux de desserte par cellule de chaque dispositif d'équipement utilisateur planifié, et une allocation de temps et de fréquence de chaque dispositif d'équipement utilisateur planifié devant être desservi par les un ou plusieurs faisceaux de desserte par cellule correspondants ;
à partir des ensembles de données, générer par l'entité de réseau autoorganisée centralisée (420) un ensemble de profils d'interférence intercellulaire entre faisceaux ;
à partir d'au moins l'ensemble de profils d'interférence intercellulaire entre faisceaux, établir par l'entité de réseau autoorganisée centralisée (420) une politique de planification de faisceau ; et
transmettre à un planificateur (430) respectif dans chaque cellule, par l'entité de réseau autoorganisée centralisée (420), la politique de planification de faisceau à appliquer à chacun des un ou plusieurs faisceaux de desserte par cellule.

**2.** Procédé selon la revendication 1, comprenant en outre les étapes suivantes :

au niveau de l'entité de collecte de données (410), recevoir de chaque cellule la série chronologique de l'ensemble respectif de données ;
au niveau de chaque cellule, recevoir de l'entité de réseau autoorganisée centralisée (420) la politique de planification de faisceau ; et
au niveau de chaque cellule, appliquer par le planificateur (430) respectif la politique de planification de faisceau à chacun des un ou plusieurs faisceaux de desserte par cellule.

**3.** Procédé selon la revendication 1 ou 2, dans lequel l'ensemble de profils d'interférence intercellulaire entre faisceaux comprend au moins une probabilité d'interférence respective pour chaque paire de faisceaux de desserte de faisceaux coplanifiés et un niveau de conformité respectif pour chaque ensemble de faisceaux coplanifiés, les faisceaux coplanifiés comprenant au moins deux faisceaux de desserte qui proviennent chacun d'une cellule respective et qui sont planifiés sur les mêmes ressources de temps et de fréquence.

**4.** Procédé selon la revendication 3, dans lequel l'étape de génération d'un ensemble de profils d'interférence intercellulaire de faisceaux croisés comprend au moins ce qui suit :

étiqueter chaque ensemble de faisceaux coplanifiés comme normal ou anormal en fonction d'une ou plusieurs données de mesure de performance par cellule ;
entraîner un modèle d'apprentissage machine (630a) en utilisant chaque ensemble étiqueté de faisceaux coplanifiés et les une ou plusieurs données de mesure de performance par cellule, afin d'obtenir un modèle d'apprentissage machine entraîné (630b) ;
utiliser le modèle d'apprentissage machine entraîné (630b) sur les une ou plusieurs données de mesure de performance par cellule par réalisation de faisceaux coplanifiés pour classifier chaque ensemble de faisceaux coplanifiés comme normal ou anormal en fonction de leur niveau de conformité respectif ; et
calculer la probabilité d'interférence respective pour chaque paire de faisceaux de desserte de faisceaux coplanifiés.

**5.** Procédé selon la revendication 4, dans lequel le niveau de conformité est corrélé à un niveau d'interférence intercellulaire entre faisceaux et aux une ou plusieurs données de mesure de performance par cellule, chaque ensemble de faisceaux coplanifiés étant classifié comme anormal lorsque le niveau de conformité respectif est corrélé à un niveau d'interférence intercellulaire entre faisceaux élevé, et étant classifié comme normal lorsque le niveau de conformité respectif est corrélé à un niveau d'interférence intercellulaire entre faisceaux faible.

6. Procédé selon la revendication 4 ou 5, dans lequel l'étape d'étiquetage de chaque ensemble de faisceaux coplanifiés comme normal ou anormal en fonction d'une ou plusieurs données de mesure de performance par cellule est basée au moins :

sur une première détection d'anomalie :

en détectant une valeur aberrante sur la base des une ou plusieurs données de mesure de performance par cellule ;
en déterminant si la valeur aberrante détectée est associée ou non à une dégradation de performance ;
en étiquetant l'ensemble de faisceaux coplanifiés correspondant à la valeur aberrante détectée comme anormal lorsque la valeur aberrante détectée est associée à la dégradation de performance ;
en étiquetant l'ensemble de faisceaux coplanifiés correspondant à la valeur aberrante détecté comme normal lorsque la valeur aberrante détecté n'est pas associée à la dégradation de performance ; et
en étiquetant chaque autre ensemble de faisceaux coplanifiés correspondant à une valeur aberrante non détectée comme normal,

et/ou
sur une deuxième détection d'anomalie :

en formant une grappe de données à partir des une ou plusieurs données de mesure de performance par cellule ;
en déterminant si la grappe de données est associée ou non à une dégradation de performance ;
en étiquetant chaque ensemble de faisceaux coplanifiés correspondant aux données de la grappe de données comme anormal lorsque la grappe de données est associée à la dégradation de performance ; et
en étiquetant chaque ensemble de faisceaux coplanifiés correspondant aux données de la grappe de données comme normal lorsque la grappe de données n'est pas associée à la dégradation de performance.

7. Procédé selon l'une des revendications 3 à 6, dans lequel l'étape d'établissement d'une politique de planification de faisceau comprend ce qui suit :
construire un motif de pénalités de faisceaux qui doivent être appliquées par cellule à chacun des un ou plusieurs faisceaux de desserte par cellule afin de limiter sélectivement une utilisation d'un ou plusieurs faisceaux coplanifiés provenant de cellules respectives sur les mêmes ressources de temps et de fréquence.

8. Procédé selon la revendication 7, dans lequel le motif comprend un parmi un motif espace-temps, un motif espace-fréquence, et un motif espace-temps-fréquence.

9. Procédé selon la revendication 7 ou 8, dans lequel l'étape de construction d'un motif de pénalités de faisceaux comprend ce qui suit, lorsqu'une probabilité d'interférence est déterminée comme étant élevée pour une paire de faisceaux de desserte de faisceaux coplanifiés comportant un premier faisceau de desserte provenant d'une cellule et un deuxième faisceau de desserte provenant d'une autre cellule :

attribuer un niveau élevé de pénalité de faisceau au premier faisceau de desserte et un niveau faible de pénalité de faisceau au deuxième faisceau de desserte à un intervalle donné, de manière à limiter une utilisation du premier faisceau de desserte par rapport au deuxième faisceau de desserte pendant l'intervalle donné ; et
attribuer un niveau faible de pénalité de faisceau au premier faisceau de desserte et un niveau élevé de pénalité de faisceau au deuxième faisceau de desserte à un autre intervalle ultérieur à l'intervalle donné, de manière à limiter une utilisation du deuxième faisceau de desserte par rapport au premier faisceau de desserte pendant ledit autre intervalle, dans lequel l'intervalle comprend au moins un parmi un intervalle de temps et un intervalle de fréquence,
ou
attribuer un niveau faible de pénalité de faisceau au premier faisceau de desserte et un niveau élevé de pénalité de faisceau au deuxième faisceau de desserte à un intervalle donné, de manière à limiter une utilisation du deuxième faisceau de desserte par rapport au premier faisceau de desserte pendant l'intervalle donné ; et
attribuer un niveau élevé de pénalité de faisceau au premier faisceau de desserte et un niveau faible de pénalité de faisceau au deuxième faisceau de desserte à un autre intervalle ultérieur à l'intervalle donné, de manière à limiter une utilisation du premier faisceau de desserte par rapport au deuxième faisceau de desserte pendant ledit autre intervalle, dans lequel l'intervalle comprend au moins un parmi un intervalle de temps et un intervalle de fréquence.

**10.** Procédé selon l'une des revendications 7 à 9, dans lequel l'étape d'application de la politique de planification de faisceau à chacun des un ou plusieurs faisceaux de desserte par cellule comprend ce qui suit :
au niveau de chaque cellule, déterminer par le planificateur (430) respectif quel dispositif d'équipement utilisateur et quel faisceau de desserte correspondant il faut planifier sur la base d'au moins le motif de pénalités de faisceaux.

**11.** Entité de réseau autoorganisée centralisée (420) comprenant des moyens au moins pour :

recevoir d'une entité de collecte de données (410) une série chronologique d'un ensemble respectif de données provenant de chaque cellule, où chaque ensemble de données comprend au moins : une ou plusieurs données de mesure de performance par cellule, un ou plusieurs faisceaux de desserte par cellule de chaque dispositif d'équipement utilisateur planifié, et une allocation de temps et de fréquence de chaque dispositif d'équipement utilisateur planifié devant être desservi par les un ou plusieurs faisceaux de desserte par cellule correspondants ;
à partir des ensembles de données, générer un ensemble de profils d'interférence intercellulaire entre faisceaux ;
à partir d'au moins l'ensemble de profils d'interférence intercellulaire entre faisceaux, établir une politique de planification de faisceau ; et
transmettre à un planificateur (430) respectif dans chaque cellule la politique de planification de faisceau à appliquer à chacun des un ou plusieurs faisceaux de desserte par cellule.

**12.** Entité de réseau autoorganisée centralisée selon la revendication 11, dans laquelle les moyens comprennent :

au moins un processeur ; et
au moins une mémoire comprenant un code de programme informatique,
dans laquelle l'au moins une mémoire et le code de programme informatique sont configurés, avec l'au moins un processeur, pour provoquer le fonctionnement de l'entité de réseau autoorganisée centralisée.

**13.** Système comprenant :

l'entité de réseau autoorganisée centralisée (420) selon les revendications 11 ou 12 ; et
des moyens au moins pour :

au niveau de l'entité de collecte de données (410), recevoir de chaque cellule la série chronologique d'un ensemble respectif de données ;
au niveau de chaque cellule, recevoir de l'entité de réseau autoorganisée centralisée (420) la politique de planification de faisceau ; et
au niveau de chaque cellule, appliquer par le planificateur (430) respectif la politique de planification de faisceau à chacun des un ou plusieurs faisceaux de desserte par cellule.

**14.** Système selon la revendication 13, dans lequel les moyens comprennent :

au moins un processeur ; et
au moins une mémoire comprenant un code de programme informatique,
dans lequel l'au moins une mémoire et le code de programme informatique sont configurés, avec l'au moins un processeur, pour provoquer le fonctionnement du système.

**15.** Support lisible par ordinateur comprenant des instructions de programme stockées sur celui-ci pour réaliser le procédé de l'une des revendications 1 à 10 lorsqu'il est exécuté par une entité de réseau autoorganisée centralisée (420).

EP 4 256 839 B1

120

112

102

111

101

100

Fig. 1

Fig. 2

| Non-real time 340 | | Near-real time 350 | | Real time 360 |
|---|---|---|---|---|

| First phase 310: Generation of cross-beam inter-cell interference profiles | ⟹ | Second phase 320: Establishment and distribution of a beam scheduling policy | ⟹ | Third phase 330: Application of the beam scheduling policy |
|---|---|---|---|---|

300

Fig. 3

Non-real time 340

Data collection entity 410

Data collection

Control entity 420

Generation of cross-beam inter-cell interference profiles

Cell 1    Cell 2    ...    Cell N

EP 4 256 839 B1

400-A

Fig. 4A

Near-real time 350

Control entity 420

Establishment of a beam scheduling policy

Cell 1    Cell 2    ⋯    Cell N

Control entity 420

Distribution of the beam scheduling policy

Cell 1

Cell 2

⋮

Cell N

400-B

Fig. 4B

Real time 360

Cell N

Cell 2

Scheduler 430

Application of the beam
scheduling policy

Cell 1

400-C

Fig. 4C

Fig. 5

500

Labelling →

Training →

Classification →

Computation →

Labelling process 610 → Dataset 620 → ML model training 630a → ML model inference 630b → Computing process 640

600

Cross-beam inter-cell interference profiles

EP 4 256 839 B1

Fig. 6

Fig. 7

700

Fig. 8

800

Fig. 9

Beam i, cell m, low penalty at $\Delta T_1 = t_1$

Beam j, cell n, high penalty at $\Delta T_1 = t_1$

$\Delta T_1 = t_1$

Cell m    Cell n    Cell p

Beams

High penalty
Low penalty
$t_2 > t_1$

Beam i, cell m, high penalty at $\Delta T_2 = t_2$

Beam j, cell n, high penalty at $\Delta T_2 = t_2$

$\Delta T_2 = t_2$

Beams

900

EP 4 256 839 B1

EP 4 256 839 B1

| | |
|---|---|
| 1010 | receiving, at a data collection entity, from each cell, a time series of a respective set of data where each set of data comprises at least: one or more per-cell performance measurement data, one or more per-cell serving beams of each scheduled UE device, and a time-frequency allocation of each scheduled UE device to be served by the corresponding one or more per-cell serving beams |

| | |
|---|---|
| 1020 | generating, by a centralized self-organizing network, cSON, entity, from the sets of data received from the data collection entity, a set of cross-beam inter-cell interference profiles |

| | |
|---|---|
| 1030 | establishing, by the cSON entity, from at least the set of cross-beam inter-cell interference profiles, a beam scheduling policy |

| | |
|---|---|
| 1040 | receiving, at each cell, from the cSON entity, the beam scheduling policy |

| | |
|---|---|
| 1050 | applying, by a respective scheduler at each cell, the beam scheduling policy to each of the one or more per-cell serving beams |

Fig. 10                                                1000

receiving, from a data collection entity, a time series of a respective set of data from each cell, where each set of data comprises at least: one or more per-cell performance measurement data, one or more per-cell serving beams of each scheduled UE device, and a time and frequency allocation of each scheduled UE device to be served by the corresponding one or more per-cell serving beams

generating, from the sets of data, a set of cross-beam inter-cell interference profiles

establishing, from at least the set of cross-beam inter-cell interference profiles, a beam scheduling policy

transmitting, to a respective scheduler in each cell, the beam scheduling policy for application to each of the one or more per-cell serving beams

Fig. 11                                        1100

1200

Memory 1220

Processor 1210

Fig. 12

Fig. 13

**EP 4 256 839 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011009105 A
- KR 20190048774 A
- US 2019141580 A
- WO 2020181533 A1